# EUROPÄISCHE PATENTSCHRIFT

(11) **EP 4 073 177 B1**
(45) Veröffentlichungstag und Bekanntmachung des Hinweises auf die Patenterteilung: **05.06.2024**
(21) Anmeldenummer: 20821163.1
(22) Anmeldetag: 07.12.2020
(51) Int. Cl.: C09C 1/02, C09D 5/08, C01B 25/32

(54) **PHOSPHATHALTIGES KORROSIONSSCHUTZPIGMENT**
PHOSPHATE-CONTAINING ANTI-CORROSIVE PIGMENT
PIGMENT ANTICORROSION CONTENANT DU PHOSPHATE

(30) Priorität: 12.12.2019 DE 102019134205; 20.03.2020 DE 102020107797
(43) Veröffentlichungstag der Anmeldung: 19.10.2022
(73) Patentinhaber: Chemische Fabrik Budenheim KG, 55257 Budenheim (DE)
(72) Erfinder: FUTTERER, Thomas, 55218 Ingelheim (DE); WISSEMBORSKI, Rüdiger, 16816 Neuruppin (DE); MOSCHEL, Sebastian, 64521 Groß-Gerau (DE); MENGEL, Siegfried, 55546 Frei-Laubersheim (DE); GARCIA MARTINEZ, David, 50013 ZARAGOZA (ES); LITTERSCHEID, Christian, 55270 Ober-Olm (DE); BACH, Sven, 65329 Hohenstein (DE); MALLMANN, Stefan, 55262 Heidesheim (DE); ERBACH, Laura, 55595 Argenschwang (DE); SCHÖLLER, Mikel, 55411 Bingen (DE); WERMTER, Hendrik, 65346 Eltville (DE); FASSBENDER, Birgit, 55122 Mainz (DE)
(74) Vertreter: WSL Patentanwälte Partnerschaft mbB
(86) Internationale Anmeldenummer: PCT/EP2020/084914
(87) Internationale Veröffentlichungsnummer: WO 2021/116030

(56) Entgegenhaltungen:
- EP-A1- 0 017 784
- EP-A1- 0 718 377
- WO-A1-99/43757
- US-A- 5 405 436

## Beschreibung

Die vorliegende Erfindung betrifft ein Verfahren zur Herstellung eines phosphathaltigen Korrosionsschutzpigmentes, das phosphathaltige Korrosionsschutzpigment erhältlich durch dieses Verfahren, sowie die Verwendung des phosphathaltigen Korrosionsschutzpigments für den passiven Korrosionsschutz.

Anstrichmitteln für die Lackierung von Metallteilen werden regelmäßig Korrosionsschutzpigmente zugesetzt, um die atmosphärische Korrosion der Metallteile zu verhindern. Gegenwärtig sind Zinkstaub und Zinkphosphat die wichtigsten Korrosionsschutzpigmente.

Die Verwendung dieser schwermetallhaltigen Korrosionsschutzpigmente wird allerdings aufgrund ökologischer Bedenken, insbesondere aufgrund der Wassertoxizität der Verbindungen, immer weiter eingeschränkt, sodass bereits erste Bemühungen bestanden, Korrosionsschutzpigmente bereitzustellen, die geringere Mengen von Schwermetallen enthalten oder sogar frei von Schwermetallen sind.

Die JPH-0 543 212 betrifft beispielsweise ein phosphathaltiges Pigment für den Korrosionsschutz, das Apatit und andere schwerlösliche Metallphosphate aufweist, wobei die schwerlöslichen Metallphosphate ausgewählt sind aus der Gruppe bestehend aus Calcium-, Magnesium-, Barium-, Zink, Cer-, Nickel-, Zinn-, Kupfer- oder Aluminiumphosphaten bzw. -pyrophosphaten. Zur Herstellung des Pigments wird zunächst Apatit aus einer Mischung von Kalkmilch und Phosphorsäure ausgefällt, wodurch ein Apatitpulver mit einer Primärpartikelgröße im Sub-µm-Bereich erhalten wird. Das Apatitpulver wird im Anschluss mit dem schwerlöslichen Metallphosphat in einem Henschel-Mixer physikalisch vermischt.

Da das Apatitpulver und das schwerlösliche Metallphosphat nur physikalisch vermischt werden, ist die Verteilung des schwerlöslichen Metallphosphats im Pigment ungleichmäßig. Der synergistische Effekt, der durch Zusammenwirken der verschiedenen Metallphosphate entsteht, ist daher in seinem Ausmaß beschränkt. Da das Apatitpulver und das schwerlösliche Metallphosphat darüber hinaus unterschiedliche Löslichkeiten aufweisen, werden einzelne Bereiche des Pigments bei Reaktion mit Wasser früher herausgelöst, wodurch eine das Pigment aufweisende Beschichtungsschicht schnell porös werden kann.

Die DE 198 07 808 A1 beschreibt in Beispiel 2 die Herstellung eines Korrosionsschutzpigmentes ausgehend von Ca(OH)₂, Mg(OH)₂ und Phosphorsäure. Die drei Komponenten werden in Wasser suspendiert, 1,5 h bei 60°C gerührt und das entstandene Produkt abfiltriert. Durch die gleichzeitige Fällung entstehen gemischtmetallische Phosphate, die eine homogene Verteilung der verschiedenen Metallionen aufweisen.

Für die Verwendung von gemischtmetallischen, phosphathaltigen Korrosionsschutzpigmenten ist allerdings nicht nur eine gleichmäßige Verteilung der verschiedenen Metalle notwendig, sondern es ist weiterhin gewünscht, dass die phosphathaltigen Korrosionsschutzpigmente auch in möglichst hoher Konzentration in die Beschichtung eingebracht werden können. Hierzu müssen die Korrosionsschutzpigmente eine möglichst geringe Ölzahl aufweisen.

Die Ölzahl oder Ölabsorption ist eine wichtige Pigmenteigenschaft und gibt eine Aussage über das Verhalten des Pigments während der Dispergierung. Der Ölbedarf gibt an, mit welcher Menge Öl eine definierte Menge des zu prüfenden Pulvers anzufeuchten ist, um eine steife, nicht fließende kittähnliche Paste zu erreichen. Je höher die Ölzahl, desto mehr Öl ist nötig, um das Korrosionsschutzpigment in der Beschichtung gleichmäßig zu dispergieren. Dies bedeutet, dass bei einer hohen Ölzahl nur eine geringe Menge von Korrosionsschutzpigment in die Beschichtung eingebracht werden kann. Die Ölzahl wird nach DIN EN ISO 787-5 bestimmt. Grundsätzlich gilt, dass mit steigender spezifischer Oberfläche mehr Öl nötig ist, um die gleiche Menge an Korrosionsschutzpigment zu dispergieren, d.h. die Ölzahl nimmt zu.

Die obigen, durch konventionelle Fällungsreaktionen hergestellten phosphathaltigen Korrosionsschutzpigmente weisen allerdings sehr feine, nadelförmige Primärpartikel im Sub-µm-Bereich, sodass deren spezifische Oberfläche deutlich über 10 m²/g liegt. Aufgrund dessen weisen die hieraus erhaltenen phosphathaltigen Korrosionsschutzpigmente eine relativ hohe Ölzahl von > 30 g/100 g, meist deutlich > 40 g/100 g auf.

Vor diesem Hintergrund ist es die Aufgabe der vorliegenden Erfindung, ein Verfahren zur Herstellung eines phosphathaltigen Korrosionsschutzpigmentes bereitzustellen, das eine geringere Ölzahl als die aus dem Stand der Technik bekannten Korrosionsschutzpigmente aufweist.

Die Aufgabe der vorliegenden Erfindung wird dadurch gelöst, dass ein Verfahren zur Herstellung eines phosphathaltigen Korrosionsschutzpigmentes bereitgestellt wird, umfassend folgende Schritte:
a) Bereitstellen von Hydroxylapatit- oder Calcium-Magnesium-Phosphat-Partikeln oder Mischungen der vorgenannten als Startpartikel in einem wässrigen Löse- bzw. Dispersionsmittel,
b) Zugeben von Kalkmilch, einer Magnesiumverbindung und Phosphorsäure zum wässrigen Löse- bzw. Dispersionsmittel, um ein Reaktionsgemisch herzustellen,
c) Umsetzen des Reaktionsgemisches zum phosphathaltigen Korrosionsschutzpigment
   - bei einer Temperatur im Bereich von 20°C bis 105°C und
   - bei einem pH-Wert im Bereich von 6,0 bis 13,0,
d) Abtrennen zumindest eines Teils des phosphathaltigen Korrosionsschutzpigmentes aus dem wässrigen Löse- bzw. Dispersionsmittel,
e) Optional: Trocknen des phosphathaltigen Korrosionsschutzpigmentes.

### Schritt a)

Im ersten Schritt der Reaktion werden Hydroxylapatit-Partikel oder Calcium-Magnesium-Phosphat-Partikel oder Mischungen der vorgenannten als Startpartikel in einem wässrigen Löse- bzw. Dispersionsmittel bereitgestellt. Unter den Begriff Hydroxylapatit fallen pulverförmige Materialien, die zu wenigstens 95 Gew.-% aus Ca₅(PO₄)₃OH bestehen, sowie calcium-defizitäres Hydroxylapatit, also pulverförmige Materialien, die zu wenigstens 95 Gew.-% aus Material mit der Formel Ca₁₀₋ₓ(PO₄)₆₋ₓ(HPO₄)ₓ(OH)₂₋ₓ, wobei 0 < x ≤ 2 ist, bestehen. Somit umfasst der Begriff nicht nur solche Pulver, deren Partikel zu 100 Gew.-% aus reinem Hydroxylapatit und/oder reinem calcium-defizitärem Hydroxylapatit bestehen, sondern auch Pulver, die beispielsweise einen Anteil an Mischkristallen von reinem oder reinem calcium-defizitärem Hydroxylapatit mit z.B. Dolomit umfassen, solange der Gesamtanteil an Ca₅(PO₄)₃OH und/oder Ca₁₀₋ₓ(PO₄)₆₋ₓ(HPO₄)ₓ(OH)₂₋ₓ, wobei 0 < x ≤ 2 ist, wenigstens 95 Gew.-% des Pulvers ausmacht.

Bevorzugte Hydroxylapatit-Pulver nach der vorliegenden Erfindung bestehen zu wenigstens 95 Gew.-%, vorzugsweise zu wenigstens 97 Gew.-%, noch bevorzugter zu wenigstens 98 Gew.-% oder am bevorzugtesten zu wenigstens 99 Gew.-% aus Ca₅(PO₄)₃OH und/oder Ca₁₀₋ₓ(PO₄)₆₋ₓ(HPO₄)ₓ(OH)₂₋ₓ, wobei 0 < x ≤ 2 ist.

Der Startpartikel dient als Kristallisationskeim auf dem das Umsetzungsprodukt des Reaktionsschritts c) als Calcium-Magnesium-Phosphat-Schicht aufwächst. Vor der Aufwachsung weisen die Startpartikel in der Regel einen Korngrößenmedian < 0,1 µm, eine Schüttdichte im Bereich von 200 bis 350 g/l, ein Aspektverhältnis > 5 und eine spezifische Oberfläche im Bereich von 15 bis 50 m²/g auf. Durch die Aufwachsung werden Primärpartikel mit einem größeren Median und einem niedrigeren Aspektverhältnis erhalten.

Der Korngrößenmedian kann mit Laserstreuanalyse nach DIN ISO 13320-1 ermittelt werden. Das Aspektverhältnis, das das Verhältnis der größten durchschnittlichen Ausdehnung der Partikel in einer ersten Dimension zur kleinsten durchschnittlichen Ausdehnung der Partikel in einer zweiten Dimension ausdrückt, kann durch optische Analyse ermittelt werden. Hierbei werden für einen Anteil des Pulvers unter dem Rasterelektronenmikroskop die größte Ausdehnung der Partikel in einer ersten Dimension und die kleinste Ausdehnung der Partikel in einer zweiten Dimension gemessen und das statistische Mittel (arithmetischer Mittelwert) der jeweiligen Werte ins Verhältnis gesetzt.

In einer bevorzugten Ausführungsform der Erfindung werden die Startpartikel in einer Konzentration im Löse- bzw. Dispersionsmittel bereitgestellt, die > 10 Gew.-% ist, noch bevorzugter > 15 Gew.-%, noch stärker bevorzugt > 20 Gew.-% und am bevorzugtesten > 25 Gew.-%. Durch eine hohe Konzentration von Startpartikeln wird sichergestellt, dass der Anteil von phosphathaltigem Korrosionsschutzpigment, das in Schritt c) durch Aufwachsung auf den Startpartikeln entsteht und nicht durch freie Fällung im Löse- bzw. Dispersionsmittel, möglichst hoch ist. Hierdurch können die mit der Erfindung verbundenen Vorteile maximiert werden.

Durch die Verringerung des Aspektverhältnisses, vorzugsweise in einen Bereich < 5, und/oder die Vergrößerung des Korngrößenmedians, vorzugsweise in einen Bereich > 0,1 µm, kann die spezifische Oberfläche des phosphathaltigen Korrosionsschutzpigments erheblich verringert werden. Vorzugsweise ist die spezifische Oberfläche des phosphathaltigen Korrosionsschutzpigmentes ≤ 10 m²/g, noch bevorzugter ≤ 8 m²/g und am bevorzugtesten ≤ 7 m²/g.

Das wässrige Löse- bzw. Dispersionsmittel weist auf dessen Gesamtgewicht bezogen mindestens 20 % Wasser auf, bevorzugt mindestens 40%, besonders bevorzugt mindestens 50%, noch bevorzugter mindestens 70 % und am bevorzugtesten mindestens 90%. In einer weiteren Ausführungsform besteht das wässrige Löse- zw. Dispersionsmittel aus Wasser. Das Löse- bzw. Dispersionsmittel kann als weiteren Bestandteil polare organische Lösemittel wie (mehrwertige) Alkohole oder Amine aufweisen. Besonders bevorzugt sind mehrwertige Alkohole als weitere Bestandteile.

Die spezifische Oberfläche wird durch BET-Messung anhand der Absorption von Stickstoff nach DIN ISO 9277 bestimmt. Wie bereits erwähnt, ist eine möglichst kleine spezifische Oberfläche für das erfindungsgemäße phosphathaltige Korrosionsschutzpigment gewünscht und von Vorteil, um die Ölzahl möglichst gering zu halten.

### Schritt b)

Gemäß der vorliegenden Erfindung können im Verfahrensschritt b) die Kalkmilch, die Magnesiumverbindung und die Phosphorsäure nacheinander zugegeben werden, wobei der zeitliche Abstand bei der Zugabe der Edukte möglichst gering sein sollte.

Vorzugsweise werden Kalkmilch, Magnesiumverbindung und Phosphorsäure zumindest teilweise zeitgleich zu dem wässrigen Löse- bzw. Dispersionsmittel zugegeben, wobei die Magnesiumverbindung vorzugsweise gelöst bzw. suspendiert in einem wässrigen Löse- bzw. Dispersionsmittel zugegeben wird. Hierdurch wird eine gleichmäßige Verteilung von Calcium und Magnesium in der auf dem Hydroxylapatit-Startpartikel aufgewachsenen Calcium-Magnesium-Phosphat-Schicht ermöglicht. Besonders bevorzugt ist die nahezu vollständig gleichzeitige Zugabe von Kalkmilch, Magnesiumverbindung und Phosphorsäure. Dies bedeutet, dass ≥ 95 % der in Schritt b) zugegebenen Massen der jeweiligen Komponenten zeitgleich zugegeben werden.

In einer Ausführungsform der Erfindung kann die Zugabe in Schritt b) dadurch erfolgen, dass die Kalkmilch, die Magnesiumverbindung und die Phosphorsäure jeweils voneinander getrennt der Suspension von Startpartikeln zugegeben werden. In diesem Fall wird die Magnesiumverbindung besonders bevorzugt als wässrige Dispersion zugegeben. Die Zugabe erfolgt vorzugsweise zumindest teilweise oder gar nahezu vollständig zeitgleich. Nahezu vollständig zeitgleich bedeutet in diesem Zusammenhang, dass ≥ 95 % der zugegebenen Massen der jeweiligen Komponenten zeitgleich zugegeben werden.

In einer weiteren Ausführungsform der Erfindung wird die Magnesiumverbindung vor der Zugabe zur Suspension von Startpartikeln in der Kalkmilch gelöst bzw. suspendiert, sodass Kalkmilch und Magnesiumverbindung zusammen zur Suspension von Startpartikeln zugegeben. Hierdurch wird eine gleichmäßige Verteilung von Calcium und Magnesium in der auf dem Startpartikel aufgewachsenen Calcium-Magnesium-Phosphat-Schicht im Korrosionsschutzpigment sichergestellt.

In einer weiteren Ausführungsform der Erfindung wird die Magnesiumverbindung vor der Zugabe zur Suspension von Startpartikeln in der Phosphorsäure gelöst bzw. suspendiert, sodass Magnesiumverbindung und Phosphorsäure zusammen zur Suspension von Startpartikeln zugegeben werden. Dies hat den Vorteil, dass die Magnesiumverbindung bei Zugabe zur Suspension von Startpartikel bereits gleichmäßig verteilt ist, sodass eine gleichmäßige Verteilung von Calcium und Magnesium in der auf dem Startpartikel aufgewachsenen Calcium-Magnesium-Phosphat Schicht vorliegt.

In einer weiteren Ausführungsform der Erfindung wird die Kalkmilch vor der Zugabe zur Suspension von Startpartikeln in der Phosphorsäure gelöst bzw. suspendiert, sodass Kalkmilch und Phosphorsäure zusammen zur Suspension von Startpartikeln zugegeben werden. Dies hat den Vorteil, dass die Magnesiumverbindung bei Zugabe zur Suspension von Startpartikel bereits gleichmäßig verteilt ist, sodass eine gleichmäßige Verteilung von Calcium und Magnesium in der auf dem Startpartikel aufgewachsenen Calcium-Magnesium-Phosphat Schicht vorliegt.

### Schritt c)

Die Umsetzung der Kalkmilch mit der Phosphorsäure soll möglichst gleichmäßig und kontrolliert erfolgen. Für den Erfolg der vorliegenden Erfindung ist es daher entscheidend, dass die Temperatur im Reaktionsgemisch oberhalb von 20°C liegt und unterhalb von 105°C. Bei bevorzugten Ausführungsformen der Erfindung erfolgt die Umsetzung in Schritt c) bei einer Temperatur im Bereich von 60 bis 105°C, vorzugsweise im Bereich von 80 bis 105°C, noch bevorzugter im Bereich von 90 bis 105°C und am bevorzugtesten im Bereich von 100 bis 105°C.

Für den Erfolg der vorliegenden Erfindung ist es auch entscheidend, dass der pH-Wert im Bereich von 6,0 bis 13,0 liegt. Bei einem pH-Wert von < 6,0 fällt Calciumhydrogenphosphat (CaHPO₄) oder Calciumhydrogenphosphatdihydrat (CaHPO₄*2 H₂O) aus. In einer bevorzugten Ausführungsform der Erfindung liegt der pH-Wert in Schritt c) im Bereich von 7,0 bis 11,0, da unter bestimmten Bedingungen oberhalb von pH 11,0 vermehrt Ca(OH)₂ als Nebenphase auftreten kann. Bei einer alternativen Ausführungsformen der Erfindung erfolgt Schritt c) bei einem pH-Wert im Bereich von 7,0 bis 9,0, da es unter bestimmten Bedingungen oberhalb von pH 9,0 zumindest teilweise zu Einschlüssen von Ca(OH)₂ kommen kann.

Bei einer bestimmten Ausführungsform der Erfindung wird die Umsetzung in Schritt c) bei Atmosphärendruck durchgeführt. Falls gewünscht, kann jedoch auch bei leicht erhöhtem Druck gearbeitet werden, vorzugsweise bis zu einem Überdruck von 1 bar.

### Schritt d)

In Schritt d) des erfindungsgemäßen Verfahrens wird zumindest ein Teil des phosphathaltigen Korrosionsschutzpigmentes aus der Suspension abgetrennt. Dies kann mit Hilfe gängiger Abtrennungsverfahren geschehen. Besonders bevorzugt ist das Abtrennungsverfahren ausgewählt aus der Gruppe bestehend aus Filtration, Verdampfung, Zentrifugation, Sedimentation und Flotation.

In einer bevorzugten Ausführungsform der Erfindung wird das abgetrennte phosphathaltige Korrosionsschutzpigment mit Wasser oder einem wässrigen Lösemittel gewaschen.

### Schritt e)

In Schritt e) wird das aus der Suspension abgetrennte phosphathaltige Korrosionsschutzpigment getrocknet. Dies kann mit Hilfe gängiger Trocknungsverfahren erfolgen, die vorzugsweise ausgewählt sind aus der Gruppe bestehend aus Konvektionstrocknung, Mikrowellentrocknung, Sprühtrocknung oder Vakuumtrocknung.

Die für die vorliegende Erfindung beanspruchten Vorteile werden bereits erreicht, wenn die Verfahrensschritte a) bis d) oder a) bis e) nur einmal wiederholt werden. Noch bessere Ergebnisse können jedoch erzielt werden, wenn diese Verfahrensschritte wenigstens zweimal, bevorzugter wenigstens dreimal, und am bevorzugtesten wenigstens fünfmal wiederholt werden. Hierdurch wird das Ausmaß der Aufwachsung auf den Startpartikel erhöht und es werden phosphathaltige Korrosionsschutzpigmente mit größerem Median und/oder geringerem Aspektverhältnis erhalten. Die phosphathaltigen Korrosionsschutzpigmente weisen daher eine geringere spezifische Oberfläche und damit eine geringere Ölzahl auf. Durch Wiederholung des Aufwachsungsprozesses kann der Fachmann daher die spezifische Oberfläche und die Ölzahl des Pigmentes weiter verringern.

In einer bevorzugten Ausführungsform der Erfindung beträgt der Median der Primärpartikel des phosphathaltigen Korrosionsschutzpigments > 0,10 µm, vorzugsweise > 0,15 µm, besonders bevorzugt > 0,20 µm und am bevorzugtesten > 0,25 µm.

In einer bevorzugten Ausführungsform der Erfindung beträgt das Aspektverhältnis der Primärpartikel des phosphathaltigen Korrosionsschutzpigments < 5, vorzugsweise < 4, besonders bevorzugt < 3 und am bevorzugtesten < 2.

Durch mehrfache Wiederholung des Aufwachsungsschrittes wird ein höheres Maß an Aufwachsung erzielt, d.h. der Anteil von Startpartikel am Gesamtanteil des phosphathaltigen Korrosionsschutzpigmentes wird erniedrigt und die erfindungsgemäßen Vorteile verstärkt.

In einer bevorzugten Ausführungsform der Erfindung werden die Verfahrensschritte a) bis d) oder a) bis e) so oft wiederholt, bis der Anteil von Startpartikel an dem phosphathaltigen Korrosionsschutzpigment < 50 Gew.-% ist, vorzugsweise < 40 Gew.-%, noch bevorzugter < 30 Gew.-% und am bevorzugtesten < 25 Gew.-%. Besonders bevorzugt ist diese Wiederholung, wenn die Startpartikel aus Hydroxylapatit bestehen oder einen Gewichtsanteil von Hydroxylapatit > 50%, bevorzugt > 70%, noch bevorzugter > 80% und am bevorzugtesten > 90% aufweisen.

In einer bevorzugten Ausführungsform der Erfindung ist die Magnesiumverbindung ausgewählt ist aus der Gruppe bestehend aus Magnesiumoxid, -hydroxid, -carbonat oder -phosphat, wobei Phosphat auch kondensierte Phosphate, Pyrophosphate und kondensierte Pyrophosphate umfasst.

In einer bevorzugten Ausführungsform der Erfindung ist der addierte Chlor- und/oder Sulfatgehalt von Hydroxylapatit-Startpartikeln, Kalkmilch, Magnesiumverbindung und Phosphorsäure ≤ 1000 ppm, vorzugsweise ≤ 500 ppm. Chlor- und Sulfationen beschleunigen den Korrosionsprozess von Metallbauteilen und laufen daher der Wirkung des Korrosionsschutzes entgegen. Der Gehalt von Chlor- und Sulfationen im phosphathaltigen Korrosionsschutzpigment ist daher möglichst gering zu halten.

Bei einer Ausführungsform der Erfindung wird das Verfahren im semi-kontinuierlichen Betrieb ausgeführt, wobei stets derjenige Anteil der in Verfahrensschritt d) abgetrennten phosphathaltigen Korrosionsschutzpigment aus dem Prozess entnommen wird, der im getrockneten Zustand einen Median der Primärpartikel von > 0,10 µm aufweist, während der übrige Anteil in Verfahrensschritt a) erneut im wässrigen Löse- bzw. Dispersionsmittel suspendiert wird.

Bei einer alternativen Ausführungsform der Erfindung wird das Verfahren im voll-kontinuierlichen Betrieb ausgeführt, wobei in Verfahrensschritt d) kontinuierlich der Anteil von phosphathaltigem Korrosionsschutzpigment abgetrennt und aus dem Verfahrenszyklus entnommen wird, der im getrockneten Zustand einen Median der Primärpartikel von > 0,10 µm aufweist, während der übrige Anteil weiter im Verfahrenszyklus verbleibt. Die kontinuierliche Abtrennung und Entnahme erfolgt vorzugsweise mit einem Schrägklärer oder einer Zentrifuge (z.B.: Stülpzentrifuge oder Schubzentrifuge).

Bei einer bestimmten Ausführungsform werden im Verfahrensschritt a) Startpartikel mit einem Median von < 0,1 µm eingesetzt und die Verfahrensschritte a) bis d) oder a) bis e) wenigstens einmal wiederholt, um ein phosphathaltige Korrosionsschutzpigment zu erhalten, dessen Primärpartikel einen Median von > 0,10 µm aufweisen und ein Aspektverhältnis von < 5, wobei die spezifische Oberfläche des phosphathaltige Korrosionsschutzpigment ≤ 10 m²/g ist und die Schüttdichte > 550 g/l beträgt.

Bei einer besonderen Ausführungsform der Erfindung wird das Verfahren im kontinuierlichen Betrieb ausgeführt, wobei ein Anteil des in Verfahrensschritt d) abgetrennten phosphathaltigen Korrosionsschutzpigments, dessen Primärpartikel einen Median von > 0,10 µm aufweisen und ein Aspektverhältnis von < 5 und deren spezifische Oberfläche ≤ 10 m²/g und deren Schüttdichte > 550 g/l beträgt, aus dem Prozess entnommen wird, während der übrige Anteil in Verfahrensschritt a) erneut im wässrigen Löse- bzw. Dispersionsmittel suspendiert wird, um dann die wiederholten Verfahrensschritte b) bis e) zu durchlaufen.

Eines der Edukte des erfindungsgemäßen Verfahrens ist Phosphorsäure (H₃PO₄). Bei bestimmten Ausführungsformen handelt es sich bei der eingesetzten Phosphorsäure um verdünnte Phosphorsäure mit einer Konzentration von 5 bis 25 Vol.-% Phosphorsäure in Wasser. Niedrige Phosphorsäurekonzentrationen begünstigen die Aufwachsung auf die Startpartikel, führen gleichzeitig jedoch zu größeren Volumina des Reaktionsgemisches. Bei bestimmten Ausführungsformen liegt die Konzentration der eingesetzten Phosphorsäure daher im Bereich von 10 bis 25 Vol.-% Phosphorsäure in Wasser, bevorzugter im Bereich von 15 bis 25 Vol.-% Phosphorsäure in Wasser.

Das zweite Edukt des erfindungsgemäßen Verfahrens ist Kalkmilch (Suspension von Ca(OH)₂ in Wasser). Bei bestimmten Ausführungsformen der Erfindung weist die Kalkmilch auf oxidischer Basis eine Konzentration von 2 bis 20 Gew.-% bezogen auf das Gesamtgewicht aus Ca(OH)₂ und Wasser auf. Noch bevorzugter weist die Kalkmilch eine Konzentration von 8 bis 12 Gew.-% auf.

Das dritte Edukt des erfindungsgemäßen Verfahrens ist eine Magnesiumverbindung. Sofern die Magnesiumverbindung in einem Löse- bzw. Dispersionsmittel zugegeben wird, so weist diese auf oxidischer Basis eine Konzentration von 2 bis 20 Gew.-% bezogen auf das Gesamtgewicht aus Magnesiumverbindung und Löse- bzw. Dispersionsmittel auf. Noch bevorzugter weist die Magnesiumverbindung eine Konzentration von 8 bis 12 Gew.-% auf.

Die Erfindung betrifft auch ein phosphathaltiges Korrosionsschutzpigment, das durch das erfindungsgemäße Verfahren erhältlich ist, wobei dieses weniger als ≤ 1 Atom-% an Metallen mit einer Dichte > 5 g/cm³ aufweist. Dies entspricht der Definition eines "Schwermetalls" gemäß Fachkundebuch Metall, 56. Auflage. Europa Lehrmittel, S. 268: Tabelle 1: Einteilung der NE-Metalle. Hierunter fallen beispielsweise Kupfer, Eisen oder auch Zink. Aufgrund von Umweltaspekten ist der Gehalt solcher Metalle im phosphathaltigen Korrosionsschutzpigment möglichst gering zu halten.

In einer bevorzugten Ausführungsform der Erfindung beträgt der Gehalt von Metallen, die eine Dichte > 5 g/cm³ aufweisen ≤ 0,5 Atom-%, besonders bevorzugt ≤ 0,2 Atom-% und am bevorzugtesten ≤ 0,1 Atom-%.

Da, wie bereits ausgeführt, Chlor- und Sulfationen den Korrosionsprozess von Metallbauteilen beschleunigen, ist der Gehalt an diesen Ionen im phosphathaltigen Korrosionsschutzpigment ebenfalls möglichst gering zu halten.

In einer bevorzugten Ausführungsform der Erfindung beträgt daher der Gewichtsanteil von Chlor des phosphathaltigen Korrosionsschutzpigments ≤ 1000 ppm, vorzugsweise ≤ 500 ppm, noch bevorzugter ≤ 300 ppm und am bevorzugtesten ≤ 150 ppm.

In einer bevorzugten Ausführungsform der Erfindung beträgt der Gewichtsanteil von Sulfat des phosphathaltigen Korrosionsschutzpigments ≤ 1000 ppm, vorzugsweise ≤ 500 ppm, noch bevorzugter ≤ 300 ppm und am bevorzugtesten ≤ 150 ppm.

In einer bevorzugten Ausführungsform der Erfindung beträgt der addierte Gewichtsanteil von Chlor und Sulfat des phosphathaltigen Korrosionsschutzpigments ≤ 1000 ppm, vorzugsweise ≤ 500 ppm, noch bevorzugter ≤ 300 ppm und am bevorzugtesten ≤ 150 ppm.

Der Gewichtsanteil von Chlor und Sulfat des phosphathaltigen Korrosionsschutzpigments kann über den addierten Chlor- und/oder Sulfatgehalt von Startpartikeln, Kalkmilch, Magnesiumverbindung und Phosphorsäure gesteuert werden. Die Chlor- und Sulfatgehalte können über gängige Elementaranalysetechniken, wie beispielsweise Atomabsorptionsspektrometrie (AAS) oder Röntgenfluoreszenzanalyse (XRF), bestimmt werden.

In einer bevorzugten Ausführungsform der Erfindung beträgt der Gesamtmagnesiumanteil des getrockneten phosphathaltigen Korrosionsschutzpigments auf oxidischer Basis 2-15 Gew.-%, bevorzugter 2-9 Gew.-%, noch bevorzugter 3-8 Gew.-%, am bevorzugtesten 4-7 Gew.-%. Unter "getrocknet" wird vorliegend ein Restwassergehalt von ≤ 1 Gew.-% verstanden. Das Magnesium im phosphathaltigen Korrosionsschutzpigment weist eine höhere Wasserlöslichkeit als Calcium auf, und sorgt daher in der Beschichtung dafür, dass sich die das Bauteil schützende Phosphatschicht schneller ausbilden kann. Es ist daher vorteilhaft, dass der Gesamtmagnesiumanteil des phosphathaltigen Korrosionsschutzpigment mindestens 2 Gew.-% beträgt, vorzugsweise mindestens 3 Gew.-%, noch bevorzugter mindestens 4 Gew.-% und am bevorzugtesten mindestens 5 Gew.- %.

In einer bevorzugten Ausführungsform der Erfindung weist der Startpartikel einen Magnesiumanteil ausgedrückt in MgO von < 2 Gew.-%, vorzugsweise < 1 Gew.-% auf, wohingegen der Gesamtmagnesiumanteil des phosphathaltigen Korrosionsschutzpigments auf oxidischer Basis (MgO) 2-15 Gew.-% beträgt. Die aufgewachsene Calcium-Magnesium-Phosphat-Schicht weist folglich einen höheren Anteil von Magnesium als der Startpartikel-Kern auf. Dies hat zur Folge, dass das Pigment bei Reaktion mit Wasser weniger schnell porös wird, als dies bei einem Pigment der Fall ist, der eine gleichmäßige Verteilung von Magnesium auch innerhalb des Kerns des Partikels aufweist.

Um einen möglichst langfristigen Schutz des metallischen Bauteils zu ermöglichen, sollte der Anteil von Magnesium allerdings auch nicht zu hoch sein, da sonst ein signifikanter Teil des phosphathaltigen Korrosionsschutzpigments eine zu hohe Wasserlöslichkeit aufweisen würde und damit ein wesentlicher Teil der Wirkung des phosphathaltigen Korrosionsschutzpigments zeitnah erschöpft wäre.

Es ist daher vorteilhaft, dass der Gesamtmagnesiumanteil des phosphathaltigen Korrosionsschutzpigments höchstens 10 Gew.-% beträgt, vorzugsweise höchstens 8 Gew.-%, noch bevorzugter höchstens 7 Gew.-% und am bevorzugtesten höchstens 5 Gew.-%.

Während des Lösungs- bzw. Dispersionsvorgang des phosphathaltigen Korrosionsschutzpigments werden die Moleküle des Löse- bzw. Dispersionsmittels an der Oberfläche adsorbiert. Daraus folgt, dass mit steigender spezifischer Oberfläche mehr Löse- bzw. Dispersionsmittel notwendig ist, um die gleiche Menge von phosphathaltigen Korrosionsschutzpigment im Löse- bzw. Dispersionsmittel zu lösen bzw. zu dispergieren. D.h. mit steigender spezifischer Oberfläche des phosphathaltigen Korrosionsschutzpigments steigt die Ölzahl.

Da für die Verwendung des phosphathaltigen Korrosionsschutzpigments niedrige Ölzahlen gewünscht sind, beträgt in einer bevorzugten Ausführungsform der Erfindung die spezifische Oberfläche des phosphathaltigen Korrosionsschutzpigments ≤ 50 m²/g, vorzugsweise ≤ 40 m²/g, noch bevorzugter ≤ 30 m²/g und am bevorzugtesten ≤ 20 m²/g.

Erfindungsgemäß beträgt die nach DIN EN ISO 787-5 bestimmte Ölzahl ≤ 40 g/100 g vorzugsweise ≤ 30 g/100 g, noch bevorzugter ≤ 25 g/100 g und am bevorzugtesten ≤ 20 g/100 g.

Zur Bestimmung der Ölzahl wurde das allgemeine Prüfverfahren für Pigmente und Füllstoffe nach DIN EN ISO 787-5 durchgeführt.

Die Erfindung betrifft weiterhin die Verwendung eines phosphathaltigen Korrosionsschutzpigments gemäß Ansprüchen 11 bis 14 für den passiven Korrosionsschutz von Metallbauteilen. Unter passivem Korrosionsschutz werden erfindungsgemäß alle Maßnahmen verstanden, welche eine gegen korrosive Medien abschirmende Wirkung erzielen. Im Rahmen der Erfindung wird in diesem Zusammenhang insbesondere der Überzug oder die Beschichtung eines Werkstoffes mit einem Beschichtungsmaterial verstanden, das das phosphathaltige Korrosionsschutzpigment aufweist.

In einer bevorzugten Ausführungsform der Erfindung wird das phosphathaltige Korrosionsschutzpigment für den passiven Korrosionsschutz eines Kraftfahrzeugs, eines Schiffes oder von Brückenbestandteilen verwendet.

Die Erfindung betrifft weiterhin die Verwendung von Calcium-Magnesium-Phosphat-Partikeln mit einer spezifischen Oberfläche ≤ 50 m²/g, vorzugsweise ≤ 30 m²/g, und einem Aspektverhältnis der Primärpartikel <5 als phosphathaltiges Korrosionsschutzpigment. Die Primärpartikel dieses Calcium-Magnesium-Phosphats weisen vorzugsweise einen Median > 0,10 µm, noch bevorzugter > 0,15 µm, besonders bevorzugt > 0,20 µm und am bevorzugtesten > 0,25 µm auf. Bevorzugt weisen die Primärpartikel eine Schüttdichte von > 550 g/l auf.

Der Magnesiumanteil des phosphathaltigen Korrosionsschutzpigments auf oxidischer Basis beträgt bezogen auf das getrocknete phosphathaltige Korrosionsschutzpigments > 10 Gew.-%, vorzugsweise > 11 Gew.-%, noch bevorzugter 12 Gew.-%, und am bevorzugtesten 13 Gew.-%, wobei unter getrocknet ein Restwassergehalt von ≤ 1 Gew.-% verstanden wird.

Die Erfindung betrifft auch die Verwendung von Hydroxylapatit als phosphathaltiges Korrosionsschutzpigment.

Die Erfindung betrifft weiterhin die Verwendung eines phosphathaltigen Korrosionsschutzpigments, das Calcium-Magnesium-Phosphat-Partikel aufweist, wobei der Magnesiumanteil des phosphathaltigen Korrosionsschutzpigments auf oxidischer Basis bezogen auf das getrocknete phosphathaltige Korrosionsschutzpigments > 10 Gew.-%, vorzugsweise > 11 Gew.-%, noch bevorzugter 12 Gew.-%, und am bevorzugtesten 13 Gew.-% beträgt, wobei unter getrocknet ein Restwassergehalt von ≤ 1 Gew.-% verstanden wird.

### BEISPIELE

Die Erfindung gemäß Ansprüchen 1-15 wird nun anhand von konkreten Ausführungsformen von erfindungsgemäßen Herstellungsbeispielen erläutert.

### Ausgangsstoffe:

| **Name** | **Hersteller** | **Reinheit** | **CAS** |
|---|---|---|---|
| Hydroxylapatit-Start partikel | Chemische Fabrik Budenheim KG | ≥ 90 Gew.-% | 1306-06-5 |
| Kalkmilch | Chemische Fabrik Budenheim KG | 10 Gew.-% CaO in H₂O | 1305-62-0 |
| Phosphorsäure | Chemische Fabrik Budenheim KG | ≥ 75 Gew.-% | 7664-38-2 |
| Mg(OH)₂ | Dr. Paul Lohmann GmbH & Co KGaA | ≥ 98 Gew.-% | 1309-82-0 |

### Messmethoden:

### Kornqrößenbestimmunq Median, D10, D90

Die Partikelgrößenverteilungen wurden sowohl volumen- als auch partikelgrößenbasiert an einem Horiba Partica LA-950V (Horiba, Ltd.; Kyoto; Japan) durch dynamische Lichtstreuung bestimmt.

### Spezifische Oberfläche

Die spezifische Oberfläche wurde nach dem BET-Verfahren durch N₂-Absorption (DIN ISO 9277) an einem BELSORP-mini Gerät der Firma BEL bestimmt. Es wurde Stickstoff mit einer Reinheit von 99,999% verwendet.

### Ölzahl

Zur Bestimmung der Ölzahl wurde das allgemeine Prüfverfahren für Pigmente und Füllstoffe nach DIN EN ISO 787-5 durchgeführt.

### Rasterelektronenmikroskop- (REM) und energiedispersive Röntgenspektroskopie (EDX)

Die Bestimmung der Verteilung der Elemente in den Proben wurde mittels Rasterelektronenmikroskop- (REM) Aufnahmen und paralleler Auswertung der charakteristischen Röntgenstrahlung (energiedispersive Röntgenspektroskopie, EDX) durchgeführt. Hierbei wurde ein REM-Spektrometer Sigma EVO der Firma Zeiss in Kombination mit einem EDX Detektor INCA Energy 350 der Firma Oxford verwendet. Aus den einzelnen Aufnahmen wurde eine Darstellung von Ausschnitten der Oberfläche erstellt (Mapping).

### Glühverlust

Der Glühverlust wird als Massenverlust beim Glühen im Verhältnis zur Trockenmasse des Ausgangsbodens ermittelt.

Die Bestimmung erfolgte nach DIN 18128.

### Allgemeine Versuchsbeschreibung

### Großtechnischer Versuch

In einem Reaktorkessel A wurden 4.000 l Wasser und 500 kg Hydroxylapatit vorgelegt und unter Rühren auf 70° C erhitzt. In einem zweiten Kessel B wurden 654 kg Phosphorsäure und 1.500 l Wasser gemischt. In einem weiteren Kessel C wurden 4.200 kg Kalkmilch, 500 l Wasser und Mg(OH)₂ gemischt, wobei die Menge an Mg(OH)₂ so gewählt wurde, dass ein Molverhältnis von Ca zu Mg von ca. 6:1 vorliegt. Die Inhalte der Kessel B und C wurden unter Rühren simultan zu dem Reaktorkessel A gegeben. Nach abgeschlossener Zugabe wurde noch 30 min gewartet, wobei das Reaktionsgemisch weiter gerührt wurde. Anschließend wurde der entstandene Feststoff von der Mutterlauge abdekantiert und um die Flüssigkeit abzufiltrieren, eine Filterpresse eingesetzt. Anschließend wurde der Feststoff bis zu einem Glühverlust < 6% getrocknet und anschließend auf eine Korngröße mit einem Median kleiner 3 µm gemahlen. Die erhaltenen Partikel können in anschließenden Versuchen als Startpartikel eingesetzt werden.

Als Vergleichsmaterial VM1 wurde das kommerziell erhältliche Calcium-Magnesium-Phosphat basierte Antikorrosionspigment Heucophos^{®} der Firma Heubach verwendet.

**Tabelle 1: Partikelgrößenverteilungen (nass gemessen)**

| Probe | D90 [µm] | Median [µm] | D10 [µm] |
|---|---|---|---|
| **1** | 10,0 | 5,7 | 2,5 |
| **2** | 10,1 | 5,7 | 2,3 |
| **3** | 10,2 | 5,8 | 2,3 |
| **4** | 10,5 | 5,9 | 2,1 |
| **VM1** | 5,5 | 2,4 | 0,5 |

Wie aus den Ergebnissen ersichtlich, sind die Partikelgrößenverteilungen der erfindungsgemä-βen Proben deutlich in Richtung höherer Partikelgrößen verschoben.

**Tabelle 2: XRF-Analvsenerqebnisse und der daraus berechnete theoretischer Glühverlust**

| Probe | CaO [Gew.-%] | MgO [Gew.-%] | P₂O₅ [Gew.-%] | Glühverlust [Gew.-%] |
|---|---|---|---|---|
| **1** | 46,2 | 6,3 | 43,4 | 4,1 |
| **2** | 46,5 | 6,1 | 43,3 | 4,1 |
| **3** | 46,8 | 5,9 | 43,3 | 4,0 |
| **4** | 46,7 | 5,9 | 43,2 | 4,2 |
| **VM1** | 43,3 | 3,4 | 41,8 | 11,5 |

Wie aus den Ergebnissen ersichtlich, weisen die Proben des erfindungsgemäßen Materials einen geringeren Glühverlust als das Vergleichsmaterial auf.

**Tabelle 3: Schüttdichte, spezifische Oberfläche nach BET und relative Ölzahl**

| Probe | Schüttdichte [g/l] | BET [m²/g] | Relative Ölzahl |
|---|---|---|---|
| **1** | 410 | 27,6 | 0,76 |
| **2** | 400 | 26,3 | 0,72 |
| **3** | 460 | 25,6 | 0,70 |
| **4** | 450 | 25,2 | 0,71 |
| **VM1** | 310 | 34,8 | 1,00 |

Um eine gute Vergleichbarkeit zu gewähren, wurde die Ölzahl relativ zum Vergleichsmaterial bestimmt.

### Kurzbeschreibung der Figuren:

- Fig. 1a:: Elektronenmikroskopische Aufnahme der Probe 1 (1 kV Beschleunigungsspannung).
- Fig. 1b:: Elektronenmikroskopische Aufnahme der Probe 1 (10 kV Beschleunigungsspannung).
- Fig. 2:: Mapping der elektronenmikroskopischen Aufnahme der Fig. 1b für das Element Calcium (Elementenverteilung bestimmt durch energiedispersive Röntgenspektroskopie).
- Fig. 3:: Mapping der elektronenmikroskopischen Aufnahme der Fig. 1b für das Element Magnesium (Elementenverteilung bestimmt durch energiedispersive Röntgenspektroskopie).
- Fig. 4:: Elektronenmikroskopische Aufnahme der Vergleichsprobe VM1.
- Fig. 5:: Mapping der elektronenmikroskopischen Aufnahme der Fig. 4 für das Element Calcium (Elementenverteilung bestimmt durch energiedispersive Röntgenspektroskopie).
- Fig. 6:: Mapping der elektronenmikroskopischen Aufnahme der Fig. 4 für das Element Magnesium (Elementenverteilung bestimmt durch energiedispersive Röntgenspektroskopie).

### Ausführliche Beschreibung der Figuren:

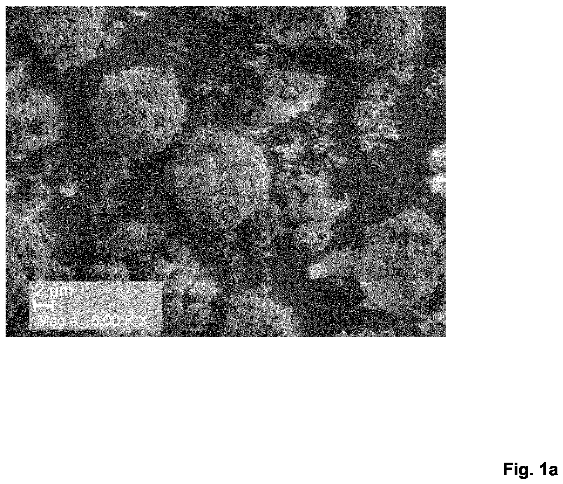

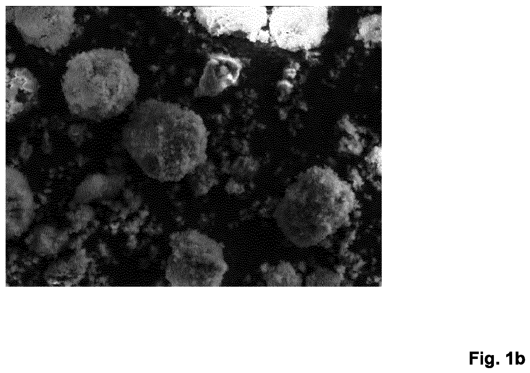

- Fig. 1a:: Zeigt eine elektronenmikroskopische Aufnahme der erfindungsgemäßen Probe 1. Wie aus der Abbildung ersichtlich, weisen die Partikel eine Kugelform auf, wobei der Durchmesser im Bereich von 6-10 µm liegt. Alle nachfolgenden Aufnahmen (Fig. 1b- Fig. 6) wurden unter der gleichen Vergrößerung (6000-fach) aufgenommen und haben somit die gleiche Skalierung wie diese Aufnahme.
- Fig. 1b:: Zeigt eine elektronenmikroskopische Aufnahme der erfindungsgemäßen Probe 1. Gleicher Bildausschnitt wie bei Fig. 1a, jedoch bei 10 kV Beschleunigungsspannung. Diese Beschleunigungsspannung wird auch für die alle nachfolgende elektronenmikroskopische Aufnahmen verwendet.

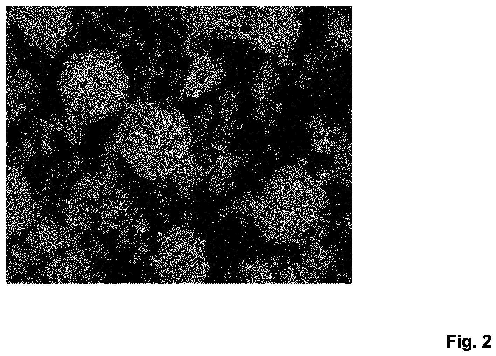

- Fig. 2:: Das Mapping der elektronenmikroskopischen Aufnahme der Fig. 1b für das Element Calcium zeigt eine gleichmäßige Verteilung von Calcium über den gesamten Partikel.

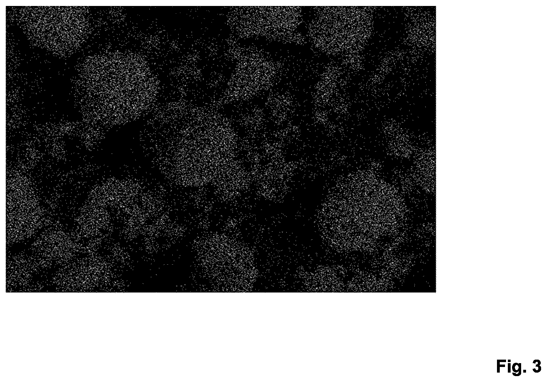

- Fig. 3:: Das Mapping der elektronenmikroskopischen Aufnahme der Fig. 1b für das Element Magnesium zeigt eine gleichmäßige Verteilung von Magnesium über den gesamten Partikel.

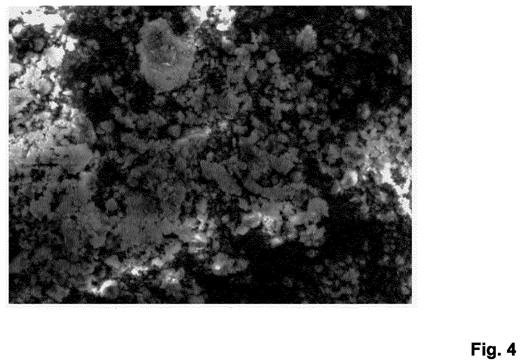

- Fig. 4:: Zeigt eine elektronenmikroskopische Aufnahme der Vergleichsprobe VM1. Wie aus der Abbildung ersichtlich, weisen die Partikel eine fein-kristalline, blättchenartige Struktur auf.

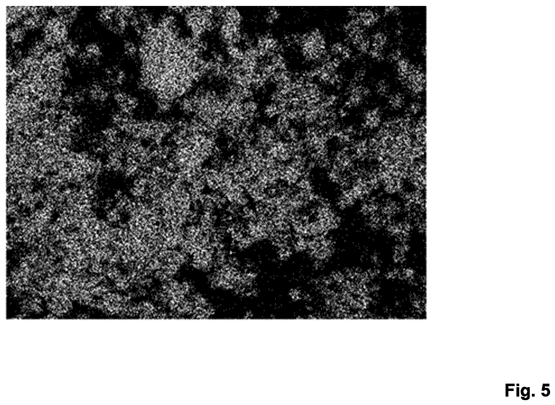

- Fig. 5:: Das Mapping der elektronenmikroskopischen Aufnahme der Fig. 4 für das Element Calcium zeigt eine gleichmäßige Verteilung von Calcium über den gesamten Partikel.

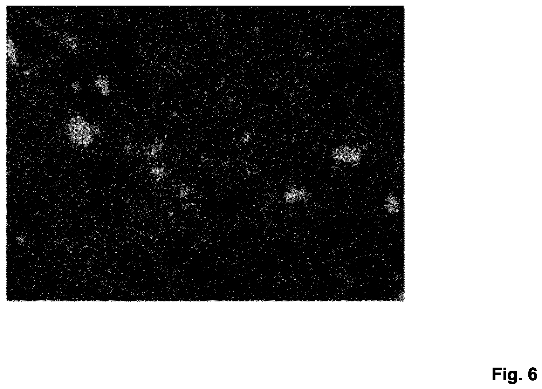

- Fig. 6:: Das Mapping der elektronenmikroskopischen Aufnahme der Fig. 4 für das Element Magnesium zeigt lokale Häufungen der Magnesiumkonzentration (besonders hell ausgeprägte Bereich des Mapping).

Die aus den obigen Herstellungsbeispielen erhaltenen und in den Figuren dargestellten Partikel können auch als Kunststoffadditiv eingesetzt werden.

## Patentansprüche

1. **Verfahren** zur Herstellung eines phosphathaltigen Korrosionsschutzpigmentes, umfassend folgende Schritte
a) Bereitstellen von Hydroxylapatit- oder Calcium-Magnesium-Phosphat-Partikeln oder Mischungen der vorgenannten als Startpartikel in einem wässrigen Löse- bzw. Dispersionsmittel,
b) Zugeben von Kalkmilch, einer Magnesiumverbindung und Phosphorsäure zum wässrigen Löse- bzw. Dispersionsmittel, um ein Reaktionsgemisch herzustellen,
c) Umsetzen des Reaktionsgemisches zum phosphathaltigen Korrosionsschutzpigment
- bei einer Temperatur im Bereich von 20°C bis 105°C und
- bei einem pH-Wert im Bereich von 6,0 bis 13,0,
d) Abtrennen zumindest eines Teils des phosphathaltigen Korrosionsschutzpigmentes aus dem wässrigen Löse- bzw. Dispersionsmittel,
e) Optional: Trocknen des phosphathaltigen Korrosionsschutzpigmentes.

2. **Verfahren** nach Anspruch 1, **dadurch gekennzeichnet, dass die** Verfahrensschritte a) bis d) wenigstens einmal, vorzugsweise mindestens dreimal, wiederholt werden, sodass ein Verfahrenszyklus entsteht, wobei in Verfahrensschritt a) statt der Hydroxylapatit-Partikel entweder
1) der in Verfahrensschritt d) vom wässrigen Löse- bzw. Dispersionsmittel abgetrennte Teil des phosphathaltigen Korrosionsschutzpigmentes oder
2) der in Verfahrensschritt d) in dem wässrigen Löse- bzw. Dispersionsmittel verbleibende Teil des phosphathaltigen Korrosionsschutzpigmentes
als Startpartikel verwendet wird.

3. **Verfahren** nach einem der vorausgehenden Ansprüche, **dadurch gekennzeichnet, dass** die Magnesiumverbindung ausgewählt ist aus der Gruppe bestehend aus Magnesiumoxid, -hydroxid, -carbonat oder -phosphat.

4. **Verfahren** nach einem der vorausgehenden Ansprüche, **dadurch gekennzeichnet, dass** vor dem Schritt b) die Magnesiumverbindung in der Phosphorsäure gelöst oder dispergiert wird.

5. **Verfahren** nach einem der vorausgehenden Ansprüche, **dadurch gekennzeichnet, dass** die Umsetzung in Schritt c) bei einer Temperatur im Bereich von ≥ 90°C, bevorzugt ≥ 100°C erfolgt.

6. **Verfahren** nach einem der vorausgehenden Ansprüche, **dadurch gekennzeichnet, dass** der addierte Chlor- und/oder Sulfatgehalt von Hydroxylapatit-Startpartikeln, Kalkmilch, Magnesiumverbindung und Phosphorsäure ≤ 500 ppm ist.

7. **Verfahren** nach einem der vorausgehenden Ansprüche, **dadurch gekennzeichnet, dass** das Verfahren entweder
f¹) im semi-kontinuierlichen Betrieb ausgeführt wird, wobei stets derjenige Anteil des in Verfahrensschritt d) abgetrennten phosphathaltigen Korrosionsschutzpigment aus dem Prozess entnommen wird, der im getrockneten Zustand einen Median der Primärpartikel von > 0,10 µm aufweist, während der übrige Anteil in Verfahrensschritt a) erneut im wässrigen Löse- bzw. Dispersionsmittel suspendiert wird, oder
f²) im voll-kontinuierlichen Betrieb ausgeführt wird, wobei in Verfahrensschritt d) kontinuierlich der Anteil von phosphathaltigem Korrosionsschutzpigment abgetrennt und aus dem Verfahrenszyklus entnommen wird, der im getrockneten Zustand einen Median der Primärpartikel von > 0,10 µm aufweist, während der übrige Anteil weiter im Verfahrenszyklus verbleibt.

8. **Verfahren** nach einem der vorausgehenden Ansprüche, **dadurch gekennzeichnet, dass** die Kalkmilch, die Magnesiumverbindung und die Phosphorsäure in Stufe c) zumindest teilweise zeitgleich zugegeben werden.

9. **Verfahren** nach einem der vorausgehenden Ansprüche, **dadurch gekennzeichnet, dass** die Phosphorsäure verdünnte wässrige Phosphorsäure mit einer Konzentration von 5-25 Vol.-% ist.

10. **Verfahren** nach einem der vorausgehenden Ansprüche, **dadurch gekennzeichnet, dass** die Kalkmilch auf oxidischer Basis (CaO) eine Konzentration von 2-20 Gew.-% bezogen auf das Gesamtgewicht der Kalkmilch aufweist.

11. **Phosphathaltiges Korrosionsschutzpigment,** erhältlich durch ein Verfahren gemäß einem der Ansprüche 1-10, **dadurch gekennzeichnet, dass** das phosphathaltige Korrosionsschutzpigment ≤ 1 Atom-% an Metallen mit einer Dichte > 5 g/cm³ aufweist und dadurch, dass die nach DIN EN ISO 787-5 bestimmte Ölzahl ≤ 40 g/100 g, vorzugsweise ≤ 30 g/100 g beträgt.

12. **Phosphathaltiges Korrosionsschutzpigment** gemäß Anspruch 11, **dadurch gekennzeichnet, dass** der Magnesiumanteil des getrockneten phosphathaltigen Korrosionsschutzpigments auf oxidischer Basis (MgO) 2-15 Gew.-% beträgt, wobei unter getrocknet ein Restwassergehalt von ≤ 1 Gew.-% verstanden wird.

13. **Phosphathaltiges Korrosionsschutzpigment** gemäß einem der vorausgehenden Ansprüche, **dadurch gekennzeichnet, dass** die spezifische Oberfläche ≤ 50 m²/g, vorzugsweise ≤ 30 m²/g beträgt.

14. **Verwendung** von Calcium-Magnesium-Phosphat-Partikeln mit einer spezifischen Oberfläche ≤ 50 m²/g, vorzugsweise ≤ 30 m²/g, und einem Aspektverhältnis der Primärpartikel < 5 als phosphathaltiges Korrosionsschutzpigment.

## Claims

1. **Method** for producing a phosphate-containing anti-corrosion pigment, comprising the following steps:
a) providing hydroxyapatite or calcium-magnesium phosphate particles or mixtures of the aforementioned as start particles in an aqueous solvent or dispersant,
b) adding milk of lime, a magnesium compound and phosphoric acid to the aqueous solvent or dispersant in order to produce a reaction mixture,
c) reacting the reaction mixture to form the phosphate-containing anti-corrosion pigment
- at a temperature in the range of 20°C to 105°C and
- at a pH in the range of 6.0 to 13.0,
d) separating at least a part of the phosphate-containing anti-corrosion pigment from the aqueous solvent or dispersant,
e) Optionally: drying the phosphate-containing anti-corrosion pigment.

2. **Method** according to claim 1, **characterised in that** the method steps a) to d) are repeated at least once, preferably at least three times so that a method cycle is created, wherein in method step a), instead of the hydroxyapatite particles, either
1) the part of the phosphate-containing anti-corrosion pigment separated from the aqueous solvent or dispersant in method step d) or
2) the part of the phosphate-containing anti-corrosion pigment that remains in the aqueous solvent or dispersant in method step d)
is used as the start particle.

3. **Method** according to any one of the preceding claims, **characterised in that** the magnesium compound is selected from the group consisting of magnesium oxide, magnesium hydroxide, magnesium carbonate or magnesium phosphate.

4. **Method** according to any one of the preceding claims, **characterised in that** the magnesium compound is dissolved or dispersed in the phosphoric acid prior to step b).

5. **Method** according to any one of the preceding claims, **characterised in that** the reaction in step c) takes place at a temperature in the range of ≥ 90°C, preferably ≥ 100°C.

6. **Method** according to any one of the preceding claims, **characterised in that** the sum of the chlorine and/or sulphate content of hydroxyapatite start particles, milk of lime, magnesium compound and phosphoric acid is ≤ 500 ppm.

7. **Method** according to any one of the preceding claims, **characterised in that** the method is carried out either
f¹) in semi-continuous operation, wherein that portion of the phosphate-containing anti-corrosion pigment separated in method step d) which in the dried state has a median of the primary particles of > 0.10 µm is always removed from the process, while the remaining portion is again suspended in the aqueous solvent or dispersant in method step a), or
f²) in fully continuous operation, wherein, in method step d), that portion of phosphate-containing anti-corrosion pigment which in the dried state has a median of the primary particles of > 0.10 µm is continuously separated and removed from the method cycle, while the remaining portion continues to remain in the method cycle.

8. **Method** according to any one of the preceding claims, **characterised in that** the milk of lime, the magnesium compound and the phosphoric acid are added at least partially simultaneously in step c).

9. **Method** according to any one of the preceding claims, **characterised in that** the phosphoric acid is dilute aqueous phosphoric acid having a concentration of 5-25 vol%.

10. **Method** according to any one of the preceding claims, **characterised in that** the oxide-based milk of lime (CaO) has a concentration of 2-20 wt% based on the total weight of the milk of lime.

11. **Phosphate-containing anti-corrosion pigment** obtainable by a method according to any one of claims 1-10, **characterised in that** the content of metals having a density > 5 g/cm³ in the phosphate-containing anti-corrosion pigment is ≤ 1 atom-% and **in that** the oil absorption value determined according to DIN EN ISO 787-5 is ≤ 40 g/100 g, preferably ≤ 30 g/100 g.

12. **Phosphate-containing anti-corrosion pigment** according to claim 11, **characterised in that** the oxide-based magnesium content (MgO) of the dried phosphate-containing anti-corrosion pigment is 2-15 wt%, wherein "dried" is understood to mean a residual water content of ≤ 1 wt%.

13. **Phosphate-containing anti-corrosion pigment** according to any one of the preceding claims, **characterised in that** the specific surface area is ≤ 50 m²/g, preferably ≤ 30 m²/g.

14. Use of calcium-magnesium-phosphate particles having a specific surface area ≤ 50 m²/g, preferably ≤ 30 m²/g, and an aspect ratio of the primary particles < 5 as phosphate-containing anti-corrosion pigment.

## Revendications

1. Procédé de préparation d'un pigment anticorrosion contenant du phosphate, comprenant les étapes suivantes consistant à :
a) mettre à disposition des particules d'hydroxylapatite ou de phosphate de calcium et de magnésium ou de mélanges des particules précédemment nommées, en tant que particules de départ, dans un solvant aqueux ou un dispersant,
b) ajouter du lait de chaux, un composé de magnésium et un acide phosphorique au solvant aqueux ou au dispersant pour générer un mélange réactionnel,
c) convertir le mélange réactionnel en pigment anticorrosion contenant du phosphate
- à une température dans la plage de 20 °C à 105 °C, et
- à une valeur de pH dans la plage de 6,0 à 13,0,
d) séparer au moins une fraction du pigment anticorrosion contenant du phosphate du solvant aqueux ou du dispersant,
e) en option, sécher le pigment anticorrosion contenant du phosphate.

2. Procédé selon la revendication 1, **caractérisé en ce que** les étapes de procédé a) à d) sont répétées au moins une fois, de préférence au moins trois fois, si bien qu'il se crée un cycle opératoire, mais dans l'étape de procédé a), au lieu des particules d'hydroxylapatite, on utilise comme particules de départ soit
1) la fraction du pigment anticorrosion contenant du phosphate séparée dans l'étape d) du solvant aqueux ou du dispersant, soit
2) la fraction du pigment anticorrosion contenant du phosphate restant à l'étape d) dans le solvant aqueux ou le dispersant.

3. Procédé selon l'une des revendications précédentes, **caractérisé en ce que** le composé de magnésium est sélectionné dans le groupe composé de l'oxyde de magnésium, de l'hydroxyde de magnésium, du carbonate de magnésium ou du phosphate de magnésium.

4. Procédé selon l'une des revendications précédentes, **caractérisé en ce que**, avant l'étape b), le composé de magnésium est dissout ou dispersé dans l'acide phosphorique.

5. Procédé selon l'une des revendications précédentes, **caractérisé en ce que** la conversion à l'étape c) se fait à une température dans une plage ≥ 90 °C, de préférence ≥ 100 °C.

6. Procédé selon l'une des revendications précédentes, **caractérisé en ce que** la teneur ajoutée en chlore et/ou sulfate des particules de départ d'hydroxylapatite, du lait de chaux, du composé de magnésium et de l'acide phosphorique est ≤ 500 ppm.

7. Procédé selon l'une des revendications précédentes, **caractérisé en ce que** le procédé soit
f1) est réalisé en semi-continu, la fraction du pigment anticorrosion contenant du phosphate séparée dans l'étape de procédé d), qui présente à l'état séché une médiane des particules primaires de > 0,10 µm, étant toujours retirée du processus, tandis que la fraction restante est remise en suspension dans le solvant aqueux ou le dispersant à l'étape de procédé a), soit
f2) est réalisé en continu, la fraction du pigment anticorrosion contenant du phosphate, qui présente à l'état séché une taille médiane des particules primaires > 0,10 µm étant, à l'étape de procédé d), séparée en continu et retirée du cycle opératoire tandis que la fraction restante continue de rester dans le cycle opératoire.

8. Procédé selon l'une des revendications précédentes, **caractérisé en ce que** le lait de chaux, le composé de magnésium et l'acide phosphorique sont ajoutés à l'étape c) au moins partiellement simultanément.

9. Procédé selon l'une des revendications précédentes, **caractérisé en ce que** l'acide phosphorique est de l'acide phosphorique aqueux dilué présentant une concentration de 5 à 25 % en volume.

10. Procédé selon l'une des revendications précédentes, **caractérisé en ce que** le lait de chaux à base d'oxyde (CaO) présente une concentration de 2 à 20 % en masse, sur la base de la masse totale du lait de chaux.

11. Pigment anticorrosion contenant du phosphate, pouvant être obtenu par un procédé selon l'une des revendications 1 à 10, **caractérisé en ce que** le pigment anticorrosion contenant du phosphate présente ≤ 1 % en atomes de métaux de densité > 5 g/cm³, et **en ce que** la prise d'huile déterminée selon DIN EN ISO 787-5 est ≤ 40 g/100 g, de préférence ≤ 30 g/100 g.

12. Pigment anticorrosion contenant du phosphate selon la revendication 11, **caractérisé en ce que** la fraction de magnésium du pigment anticorrosion contenant du phosphate séché à base d'oxyde (MgO) est comprise entre 2 et 15 % en masse, où on entend par séché une teneur résiduelle en eau ≤ 1 % en masse.

13. Pigment anticorrosion contenant du phosphate selon l'une des revendications précédentes, **caractérisé en ce que** la surface spécifique ≤ 50 m²/g, de préférence ≤ 30 m²/g.

14. Utilisation de particules de phosphate de calcium et de magnésium présentant une surface spécifique ≤ 50 m²/g, de préférence ≤ 30 m²/g, et un rapport d'aspect des particules primaires < 5 en tant que pigment anticorrosion contenant du phosphate.
